# EUROPEAN PATENT SPECIFICATION

(11) **EP 1 849 756 B1**
(45) Date of publication and mention of the grant of the patent: **30.05.2018**
(21) Application number: 07398008.8
(22) Date of filing: 27.04.2007
(51) Int. Cl.: C10L 5/36, C10L 5/44, C10L 5/48

(54) **A process for the treatment and recovery of residues and effluents from olive oil production units through the utilisation and reprocessing of cork industry waste**
Verfahren zur Behandlung und Wiederaufarbeitung der Abfälle und Abwasser der Olivenölindustrie durch die Nutzung und Wiederaufarbeitung der Abfälle der Korkindustrie
Un processus pour le traitement et retraitement de residus et effluents de la production d'unites de huile d'olive par l'usage et retraitement des residus de l'industrie des bouchons

(30) Priority: 28.04.2006 PT 10347006
(43) Date of publication of application: 31.10.2007
(73) Proprietor: Universidade de Trás-os-Montes e Alto Douro, 5000-911 Vila Real (PT)
(72) Inventor: Almeida Ribeiro Claro, Joao Carlos Almeida, 5000-911 Vila Real (PT)
(74) Representative: Ferreira, Maria Silvina

(56) References cited:
- GB-A- 2 237 012
- PT-B- 82 470
- US-A- 3 640 696
- US-A1- 2003 198 797
- DATABASE WPI Week 199231 Derwent Publications Ltd., London, GB; AN 1992-251904 XP002123532 & ES 2 028 497 A6 (DORSCH SERRANO F) 1 July 1992 (1992-07-01)
- VALLINI G ET AL: "COMPOSTING AGRO-INDUSTRIAL BYPRODUCTS" BIOCYCLE, JG PRESS, EMMAUS, PA, US, vol. 25, no. 4, May 1984 (1984-05), pages 43-46,51, XP008083086 ISSN: 0276-5055
- TRILLAS ET AL: "Composts from agricultural waste and the Trichoderma asperellum strain T-34 suppress Rhizoctonia solani in cucumber seedlings" BIOLOGICAL CONTROL, SAN DIEGO, CA, US, vol. 39, no. 1, October 2006 (2006-10), pages 32-38, XP005631961 ISSN: 1049-9644

## Description

### AREA OF THE INVENTION

This invention relates to a treatment and reprocessing process for residues and effluents from olive oil production units through the utilisation and reprocessing of cork industry residues as applied to the treatment of effluents.

### SUMMARY OF THE INVENTION

The invention consists of a process that utilises cork industry residues, namely cork dust (cork particles less than 0.2 mm in size) and particles less than 2 mm in size which originate from the exterior surface of the cork planks (designated in Portuguese cork industry by "terras"), mixed mechanically or manually with the effluents and/or residues from olive oil production units creating a sludge or pulp that can be used as a fertilizer or, alternatively, after drying as a source of energy fuel.

### BACKGROUND TO THE INVENTION

Olive oil can be obtained by three processes each of which include the phases of weighing, washing of the olives, warehousing and milling (or grinding).

The traditional process involves a pressing phase of the olives followed by a decantation/centrifugation which produces husks and olive mill wastewater in addition to the olive oil.

More modern methods include, a "beating" process replacing the pressing, followed by an "extraction" in horizontal centrifuges. Water is added during these last two phases to facilitate the separation of the olive oil.

These more modern methods consist of:
- **3 Phase:** Here the effluents are the same as those in the traditional method (husks and olive mill wastewater which are separate),
   or;
- **2 Phase:** this process results in a single effluent, known in the industry as "humid husks" or a "paste" (the result of the husks mixed together with the olive mill wastewater).

Most of the olive oil currently produced uses these two production processes above.

There are also production units known as "husk oil extraction units" which extract some of the remaining olive oil from the "husks" or "humid husks".

In any case and irrespective of the method used, all the units generate residues and effluents which are harmful to the environment.

Some existing treatment and/or reprocessing systems for effluents from olive oil production units are described below:
**Irrigation of agricultural soils.** This is the oldest method of a controlled elimination of olive mill wastewater and consists of dispersing it over the ground. This system is based on a physical, chemical and microbiological interaction between the components and the micro-organisms of the soil and the effluent. This process is referred to in document ES2051242.
**Lagooning.** This consists of collecting olive mill wastewater in evaporation pools which undergo a natural evaporation process. This process is currently in use as it is technically accessible and economic.
**Concentration through evaporation.** This is a system of forced evaporation to respond to high volumes of residual waters. The advantage of this method over lagooning is that it requires less available space and has a lower evaporation time and enables the evaporated water to be recovered due to the installation of condensers. However these systems are costly due to the equipment they require and the energy consumed in the process.
**Physical/Chemical Processes.** These are very important for the treatment of the residues and include the use of flocculants and coagulants in the effluent but they do produce sludge that has to be eliminated. Treatment with lime (calcium oxide - CaO(s)) is the most common process.
**Thermal Processes.** Partial drying or evaporation under heat, based on a few processes of variable complexity used by well-practiced techniques in the chemicals industry. These consist of the elimination of part of the water using multiple-effect evaporators or concentrators, or horizontal or vertical dryers.
**Biological Processes.** These are based on the use of micro-organisms, such as yeasts and filamentous fungi which develop within the olive mill wastewater degrading its constituents.

Concerning the treatment of effluents from olive oil production units and specifically from the oil presses themselves, the Environmental and Energy Reprocessing Project (*Projecto de Valorização Ambiental e Energética*) must be highlighted here. This is a partnership between the National Institute of Engineering and Industrial Technology (*Instituto Nacional de Engenharia e Tecnologia Industrial* - *INETI*) and the Municipal Town Hall of Abrantes (*Câmara Municipal de Abrantes*), which treats effluents from olive presses in the Municipal Waste Water System. (*Estação de Tratamento de Águas Residuais*/ *ETAR Municipal*). This is a low-energy consumption anaerobic digestion residue treatment process which transforms the organic matter into bio-gas and creates a stable residue that can be appropriately used in agriculture as a fertiliser. The bio-gas can be used to produce electricity and/or thermal energy thus having some economic value.

Other projects and studies have considered the treatment processes of olive mill wastewater and are highlighted here:
- "Obtaining clean olive mill wastewater via a microbial route." (CETAV, 2004);
- "Study of enzymes involved in the discoloration of olive mill wastewater" (Doctorate Dissertation "Study of enzymes involved in the discoloration of olive mill wastewater". Jose Albino. 2004.);
- "Degradation of phenolic acids through advanced oxidation processes and pre-treatment of olive mill wastewater with Fenton's reagent" (Doctorate Dissertation "Degradation of phenolic acids through advanced oxidation processes and pre-treatment of olive mill wastewater with Fenton's reagent". Jose Alcides Peres. 2001.)
- "Effect of irrigation with olive mill wastewater treated with some chemical properties on soil and in the leaves of the olive tree" (*Hermínia Domingues*, Cidália Peres*, Odete Romero Monteiro*, Filipe Pedra**, Luis Catulo*, Maria Teresa Vilar*, Jose Casimiro Martins*, Fausto Leitão*.*
   *National Agronomy Station (Estação Agronómica Nacional)
   **Agrochemical Laboratory Rebelo da Silva. (*Laboratório Químico Agrícola Rebelo da Silva.)*

Another solution for the treatment of the olive husks is described in document ES2020640. This details a process to treat the olive husk by blending the husk with shavings or strips of wood, thereby obtaining an agglomerated product which after drying and pressing becomes a solid material commonly earmarked for briquettes. However this process does have some limitations, mainly that it only treats the residues (husks) and cannot be applied to the treatment of the effluents (olive mill wastewater).

On the other hand as far as the cork industry residues are concerned (cork dust and particles less than 2 mm in size originating from the exterior surface of the cork planks, normally designated in Portuguese cork industry by "terras"), which are considered as industrial residues (Code LER 03 01 99), problems associated with drainage and storage have been verified, as well as the harmful environmental effects caused by them. The study by the Industrial Association of the District of Aveiro ("Multi-Sector Study on the Area of Environment", 2000.) must be highlighted here. This study explicitly refers on page 61 to the fact that "The production of cork dust is, inclusively, responsible for some physiographical changes verified in the Council of Santa Maria da Feira (small valleys that disappear due to the continual deposition of cork dust in them)". However, according to references in the study of Prof. Luís Cabral e Gil: "Cork Processing Technology and Chemical Constitution", INETI, the cork dust has had its main use as a combustible fuel for producing energy (burns in kilns), with a small fraction of the remainder being used for filling in corks of a lower quality, in the linoleum factory, in the control of soils, etc."

Therefore it can be seen that none of the processes already known represent a sole and universal solution for the effective treatment and reprocessing of residues and effluents from olive oil production units and which at the same time is a solution for the drainage and efficient reprocessing of cork industry residues.

In fact, the known technologies only present part of the solution to the problem and some infer high implementation costs.

### DETAILED DESCRIPTION OF THE INVENTION

Company strategies are now becoming increasingly focused on factors for increasing productivity which also profess to be "environmentally-friendly". The reprocessing of residues and sub-products is therefore at the top of corporate concerns now that companies have raised the impact to a level where this objective can be achieved.

Given the strategic importance that these sectors represent for Portugal and for the other producer countries, the olive oil production and the cork transformation units must not disregard this new attitude.

In this context this invention constitutes a very important technological platform internally for those industries, launching them into a strategic framework characterised by an increase in productivity, a cleaner and more environmentally-friendly production and the sustainability of the olive oil and cork industries.

This invention relates to a process for the treatment and reprocessing for residues and effluents from olive oil production units through the utilisation and reprocessing of cork industry residues according to claim 1. The process for the treatment of effluents and residues from olive oil production units through the utilisation and reprocessing of cork industry residues, the subject of this invention, can be applied to the treatment of effluents and residues from olive oil production units in the following situations:
- Through the separate treatment of the residue and the effluent (husks and olive mill wastewater);
- Through the joint treatment of the residue and the effluent (humid husks).

In this sense the process for the treatment of effluents and residues from olive oil production units through the utilisation and reprocessing of cork industry residues, the subject of this invention, can be applied in any type of olive oil production installation whether it is using the traditional production system or the modern two-phase or three-phase production system. Therefore the subject of this invention constitutes a complete and universal solution for the efficient treatment of such residues and effluents.

Therefore the scope of this proposal also includes industrial cork residues such as cork dust used as natural products, (cork particles less than 0.2 mm in size) and particles less than 2 mm in size originating from the exterior surface of the cork planks (normally designated in the Portuguese cork industry by "terras"), as being the effluents and residues used to treat/gather the effluents and residues from the olive oil production units normally designated as olive mill wastewater, husks and humid husks.

Therefore this invention consists of mixing the effluents and residues from the olive oil production units with cork industry residues, for example those normally known by cork dust and particles less than 2 mm in size originating from the exterior surface of the cork planks, with the quantity of cork dust being used in this procedure depending on the moisture content or water in the effluent and/or residues. However, on average a volume of cork dust equal to the volume of effluent and/or residue to treat is used.

The treatment process of effluents and residues from olive oil production units and its reprocessing through the addition of cork industry residues is the result of a crude mechanical mixture of the cork dust and the residues and/or effluents of the olive oil production units making it a viable implementation irrespective of the sizes of these units.

The product obtained after the treatment of the effluents and residues from the olive oil production units through the utilisation cork industry residues can be:
- Reprocessed into energy fuel due to its capacity to generate calorific energy through burning in a kiln or other heating appliances;
- Used as fertiliser and also in the correction of soil properties (for example for alkaline soil due to its acid pH).

In an aspiration to use the product obtained for energy generation, portions of the product can be obtained through drying in the open air, due to the successive gathering of drier and higher layers which have a moisture content below 40%. The withdrawn portions (identical to pieces of coal) can be packaged or sold in bulk. If the drying is done in moulds, plugs or cylinders identical to briquettes are obtained.

In another form of reprocessing, the output from the treatment process of residues and effluents from olive oil production units and its reprocessing through the addition of cork industry residues, can be used in a dust or semi-dehydrated form for the production of turf, as a component for fertilisers and as a rectifier of soil characteristics.

However it must be emphasised that in an alternative form of this invention, an effluent or residue with a high organic load, i.e. with a COD above 500 mg/L O2 and a BOD5 above 250 mg/L O2 can be added to the new product presented such as for instance the effluents and/or residues originating from pig-breeding and poultry breeding. This makes the utilisation of this new mixture viable as a fresh compound fertiliser or after composting as a stabilised fertiliser.

The product obtained from the treatment process for residues and effluents of olive oil production units using cork industry residues can therefore be presented in the following forms:
- In bulk;
- In compact cylinders in a case of continuous production, as for instance in a mixture with continuous extrusion;
- Placed in moulds which will produce briquettes or plugs.

The product obtained can be reprocessed as an energy source or a fertiliser.

From the point of view of the implementation of this invention on an industrial scale, each olive oil production unit will have to construct a tank with sufficient capacity for the volume of residues and effluents per campaign (it should be noted however that many of these units already use a tank for collecting all their effluents and residues).

Therefore the cork dust can be deposited directly in the residual effluent collection tank or stored in the adjacent silo.

In the first case during the olive oil production process, during which the effluents and/or residues are produced, these are guided to the collection tank and the cork dust is added to its mixture. This mixture can be executed manually using appropriate sizes and shapes of canes or mechanically by using rotary blades or grilles or "see-saw systems".

If the agricultural unit opts for storage of the dust in a silo, it can use a mixed system which consists basically of a simultaneous admission of effluents and/or residues with the cork dust being added continuously to the mixture, as for instance by using a tube with continuous extrusion. The product of this mixture can be directed towards a drying sector in a greenhouse or in the open air following a continuous or phased process in a production line or in the tank according to the storage and/or the packaging.

In a case where the mixing is carried out in the tank, the solids (product that is already dry) can be collected manually (using a shovel or a hoe) using a mechanical rocker or a scoop and which produces portions of solid with an identical shape to pieces of coal. These can be packaged or bagged for sale or, if it to be used in kilns, the bulk sales option can be chosen as in the case of firewood.

Therefore the treatment process for effluents and residues from olive oil production units through the use and reprocessing cork industry residues, the subject of this invention, is shown as the only universal solution for the effective treatment and reprocessing of effluents and residues from olive oil production units whilst simultaneously enabling the reprocessing of cork industry residues.

This invention also offers a complete solution once all the residues and/or effluents of the olive oil production units are treated and the end-product obtained does not create a new environmental problem.

The product obtained after the treatment process of effluents and residues from olive oil production units after the addition of cork industry residues includes the following characteristics:
- Initially it has an appearance of sludge or pulp and a moisture content between [500.00 - 850,00]g kg-1, a C/N ratio between [62.1 - 109.1], and a pH value between approximately [4.5 - 5.0];
- After drying the product obtained has the form of an agglomerate and with a calorific value between [18.0 - 22.2] MJ/kg (using the method ASTM D 1989);

Therefore the recovery of the dry product, for instance by burning in a biomass boiler will be extremely feasible once a product (biomass) has a calorific value between [18.0 - 22.2] MJ/kg (using the method ASTM D 1989).

In addition its usage as a fertiliser or as a fertiliser component also showed great potential based on the analyses carried out in this regard.

It is also important to point out that the costs associated with implementing the process are very low because the mixing process can be done manually (viable for the small and medium-sized units) or using simple mechanical systems (viable for the medium and large-sized units).

The invention also presents a solution to an environmental problem which is duly identified and regulated by European standards and national laws which establish usage norms for olive mill wastewater for the irrigation of agricultural soils.

Another advantage of the invention described is considered to be not only its extreme simplicity but also the ease of its implementation (even in small units) and in the fact that it uses a natural product (cork dust) which is an industrial residue and the cause of environmental problems, to resolve another environmental problem (pollution from olive mill wastewater).

This enables the difficulties and disadvantages of the existing technologies to be overcome, especially those related to high implementation/execution costs and to the fact that they do not translate into a global solution, contributing only partial and/or one-off solutions to the problem.

In addition to all the environmental benefits, the process enables a product to be obtained that has a commercial value and which may constitute an attractive financial compensation for the olive oil production units and for the cork transformation units.

To summarise therefore, the industrial reprocessing of residues and effluents from the olive oil production units represents:
- The solution to an environmental problem namely the drainage of olive mill wastewater and of the husks;
- The reprocessing of effluents and residues of the olive oil production units;
- The reduction of the negative environmental impact resulting from olive oil production.

Industrial reprocessing of the cork residues enables the creation of a valid alternative to a simple use as fuel for burning, enabling its sale to the olive oil industry and reducing the possibility of it being poured into the ground.

### EXAMPLES

Below are some non-restrictive examples of the treatment and reprocessing process of residues and effluents from olive oil production units through the use and reprocessing of the cork industry residues.

### Example 1:

A process for the treatment and reprocessing of effluents from olive oil production units (olive mill wastewater) and the reprocessing of cork industry residues using the cork dust (particles less than 0.2 mm in size). This includes the following steps:
- Roughly mixing and, if necessary with the assistance of a mechanical agitator, equal volumes of olive mill wastewater and cork dust (particles less than 0.2 mm in size) until a pulp is created with a moisture content of 845.4 g kg⁻¹, a C/N ratio of 109.1, a pH value of 4.84 and an organic matter ratio (referred to as dry matter) of 609.3 g kg⁻¹. This mixture produces a volume of sludge slightly above the initial volume of the olive mill wastewater, for instance, a mixture of 250 mL of olive mill wastewater and a volume of 250 mL of cork dust, produces a volume of 300 mL of sludge;
- Drying the resulting product, the sludge, in a greenhouse at an approximate temperature 45°C, or in the air in adequate trays or moulds until a solid product is obtained (moisture content lower than 40% m/m). At the end of 3 days, in a greenhouse at 45°C, the product obtained will be in the form of a solid agglomerate with a calorific value or heating value between [14.00- 18.00] MJ/kg;
- Collecting the product from the tray or removing it from the moulds to obtain bulk, cylindrical or fine strip pieces (briquettes or "pellets") for use as a fuel.

### Example 2:

A treatment and energy reprocessing process for effluents and residues from the olive oil production units (humid husks) and cork industry residues through the use of cork dust (particles less than 0.2mm is size). This includes the following steps:
- Roughly mixing and if necessary with the assistance of a mechanical agitator, 16% (m/m) of cork dust with humid husks;
- Drying the resulting product in a drying oven or greenhouse at an approximate temperature of 45°C, or in the air in adequate trays or moulds until a solid product is obtained (moisture content lower than 40% m/m). At the end of 2 days, in a greenhouse at 45 °C, the product obtained will be in the form of a solid agglomerate with a higher calorific value of 22.2 MJ/kg and a lower calorific value of 20,6 MJ/kg (using the method ASTM D 1989).

### Example 3:

A treatment and reprocessing process as a fertiliser from the effluents and residues of the olive oil production units (humid husks) with cork industry residues through the utilisation of cork dust (particles less than 0.2 mm in size). This includes the following steps:
- Roughly mixing and if necessary with the assistance of a mechanical agitator, 16% (m/m) of cork dust with humid husks until a pulp or turf is obtained which has a moisture content of 593.9 g Kg⁻¹, a C/N ratio of 62.1, a pH value of 4.76 and an organic matter ratio (referred to as dry matter) of 870.4 g kg⁻¹;
- Collecting the product in suitable packaging for outside use or being placed for composting.
- Collecting the product in suitable packaging for direct use (without composting) or being placed for composting.

## Claims

1. A process for the treatment and reprocessing of residues and effluents from olive oil production with cork industry residues comprising mixing the olive oil residues and effluents with cork dust and/or particles, in order to obtain a pulp or sludge mixture with a moisture content between 500 to 850 g/kg and a C/N ratio between 62.1 to 109.1.

2. The process according to the preceding claim, wherein the mixture has a pH value between 4.5 to 5.

3. The process according to any of the preceding claims, wherein the mixing has, on average, an equal volume of residues and effluents from olive oil and volume of cork residues.

4. The process according to any of the preceding claims, comprising a drying step of the pulp or sludge being done in a drying oven or greenhouse or in the open air, in order to obtain a solid product which, when removed from a mould, enables bulk pieces to be obtained.

5. The process according to claim 4, wherein the drying step of the pulp or sludge is done in a drying oven or greenhouse, at 45 °C during 2 to 3 days.

6. The process according to claim 1 wherein the mixing further comprises the addition of another effluent or residue with a high organic load.

7. The process according to claim 6 wherein said effluent or residue with a high organic load has a COD above 500 mg / 1, and a BOD5 above 250 mg / 1.

8. The process according to claim 6 and 7, comprising composting this mixture.

9. Utilisation of the products obtainable from the process described in any of the preceding claims as a fertiliser or as a source of energy.

10. Utilisation of the products obtainable from the process according to any of the claims 1-8 as a fertiliser component.

11. Utilisation of the products obtainable from the process according to any of the claims 1-8, as a soil rectifier.

12. Utilisation of the products obtainable from the process according to claim 6 - 7, as fresh compound fertilizers.

13. Briquettes or plugs, and / or compact cylinders and / or bulk solid pieces obtainable by the processes of the claims 1-8.

## Patentansprüche

1. Ein Verfahren zur Behandlung und Wiederaufbereitung von Rückständen und Abwässern der Olivenölproduktion mit Rückständen der Korkindustrie, umfassend das Mischen von Olivenölrückständen und -abwässern mit Korkstaub und/oder -partikeln, um eine Mischung aus Pülpe bzw. Schlamm mit einem Feuchtigkeitsgehalt zwischen 500 bis 850 g/kg und einem C/N-Verhältnis zwischen 62,1 und 109,1 zu erhalten.

2. Das Verfahren nach dem vorhergehenden Anspruch, wobei die Mischung einen pH-Wert zwischen 4,5 und 5 aufweist.

3. Das Verfahren nach einem der vorhergehenden Ansprüche, wobei die Mischung im Durchschnitt gleiche Volumenmengen von Rückständen und Abwässern von Olivenöl und Volumenmengen von Korkrückständen aufweist.

4. Das Verfahren nach einem der vorhergehenden Ansprüche, umfassend eine Trocknungsstufe der Pülpe bzw. des Schlammes, die in einem Trocknungsofen oder Treibhaus oder im Freien erfolgt, um ein festes Produkt zu erhalten, das nachdem es aus einer Form entfernt wird ermöglicht, Schüttgut zu erhalten.

5. Das Verfahren nach Anspruch 4, wobei die Trocknungsphase der Pülpe bzw. des Schlammes in einem Trocknungsofen oder Treibhaus bei 45 °C 2 bis 3 Tage lang erfolgt.

6. Das Verfahren nach Anspruch 1, wobei die Mischung ferner die Beigabe eines anderen Abwassers oder Rückstandes mit einem hohen organischen Inhalt umfasst.

7. Das Verfahren nach Anspruch 6, wobei das besagte Abwasser oder Rückstand mit einem hohen organischen Inhalt einen CSB von über 500 mg/L und einen BSB5 von über 250 mg/L aufweist.

8. Das Verfahren nach Anspruch 6 und 7, umfassend die Kompostierung dieser Mischung.

9. Verwendung der durch das in einem der vorhergehenden Ansprüche beschriebenen Verfahren erhältlichen Produkte als Düngemittel oder als eine Energiequelle.

10. Verwendung der durch das Verfahren nach einem der Ansprüche 1-8 erhältlichen Produkte als Düngemittelkomponente.

11. Verwendung der durch das Verfahren nach einem der Ansprüche 1-8 erhältlichen Produkte als Bodenaufbereiter.

12. Verwendung der durch das Verfahren nach den Ansprüchen 6-7 erhältlichen Produkte als frisch Mehrnährstoffdünger.

13. Briketts oder Pellets und/oder kompakte Zylinder und/oder festes Schüttgut erhältlich durch die Verfahren nach Ansprüche 1-8.

## Revendications

1. Un processus pour le traitement et le retraitement de résidus et d'effluents de la production d'huile d'olive avec les résidus de l'industrie du liège comprenant le mélange de résidus et d'effluents de l'huile d'olive avec de la poussière de liège et/ou des particules, afin d'obtenir un mélange de pulpe ou boue avec une teneur en humidité entre 500 et 850 g/kg et un rapport C/N entre 62,1 et 109,1.

2. Le processus selon la revendication précédente, où le mélange a une valeur de pH comprise entre 4,5 et 5.

3. Le processus selon l'une quelconque des revendications précédentes, où le mélange a, en moyenne, un volume égal de résidus et d'effluents de l'huile d'olive et de volume de résidus de liège.

4. Le processus selon l'une quelconque des revendications précédentes, comprenant une étape de séchage de la pulpe ou de la boue, étant effectuée dans un four de séchage ou dans une serre ou encore, à l'air libre, afin d'obtenir un produit solide, lequel, lorsqu'il est retiré d'un moule, permet d'obtenir des pièces en masse.

5. Le processus selon la revendication 4, où l'étape de séchage de la pulpe ou de la boue est réalisée dans un four de séchage ou dans une serre à 45 °C pendant 2 à 3 jours.

6. Le processus selon la revendication 1, où le mélange comprend également l'addition d'un autre effluent ou résidu avec une charge organique élevée.

7. Le processus selon la revendication 6, où ledit effluent ou résidu avec une charge organique élevée a une DCO supérieure à 500 mg/L et une DBO5 supérieure à 250 mg/L.

8. Le processus selon les revendications 6 et 7, comprenant le compostage de ce mélange.

9. Utilisation des produits à obtenir du processus décrit dans l'une quelconque revendication précédente comme engrais ou comme source d'énergie.

10. Utilisation des produits à obtenir du processus selon l'une quelconque des revendications 1-8 comme composant d'engrais.

11. Utilisation de produits à obtenir du processus selon l'une quelconque des revendications 1-8 comme un redresseur de sol.

12. Utilisation de produits à obtenir du processus selon la revendication 6-7 comme engrais composés frais.

13. Briquettes ou mottes et/ou cylindres compacts et/ou pièces solides en masse à obtenir par les processus selon les revendications 1-8.
